Europäisches Patentamt

European Patent Office

Office européen des brevets

(19)

(11) Numéro de publication : **0 194 200**
**B1**

(12) **FASCICULE DE BREVET EUROPÉEN**

(45) Date de publication du fascicule du brevet :
28.09.88

(51) Int. Cl.⁴ : **F 16 L 23/04**

(21) Numéro de dépôt : **86400434.6**

(22) Date de dépôt : **28.02.86**

(54) **Collier de serrage télémanipulable.**

(30) Priorité : **08.03.85 FR 8503430**

(43) Date de publication de la demande :
**10.09.86 Bulletin 86/37**

(45) Mention de la délivrance du brevet :
**28.09.88 Bulletin 88/39**

(84) Etats contractants désignés :
**BE DE GB IT**

(56) Documents cités :
**DE-A- 2 040 848**
**FR-A- 1 430 344**
**GB-A-   824 991**
**US-A- 1 797 383**

(73) Titulaire : **COMMISSARIAT A L'ENERGIE ATOMIQUE**
**31/33, rue de la Fédération**
**F-75015 Paris (FR)**

(72) Inventeur : **Fiori, Robert**
**Saint Laurent La Vernede**
**F-30330 Connaux (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention se rapporte à un collier de serrage télémanipulable destiné à raccorder deux tuyauteries équipées d'embouts coniques à leurs extrémités.

On connaît actuellement de nombreuses techniques de raccordement de tuyauteries. En particulier, il est connu d'équiper les tuyauteries d'embouts coniques que l'on raccorde au moyen d'un collier de serrage présentant un profil interne tronconique complémentaire de celui des embouts. Cette technique présente l'avantage de permettre une démultiplication des efforts appliqués. En effet, l'effort de serrage appliqué sur le collier conduit à réduire le diamètre de celui-ci. L'effort radial qui en résulte est transformé en un effort de serrage axial par la coopération des surfaces tronconiques complémentaires du collier et des embouts.

Dans l'état actuel de la technique, il existe plusieurs types de colliers à profil interne conique servant à raccorder des tuyauteries équipées d'embouts tronconiques. Ainsi, il est connu d'utiliser des colliers articulés, des colliers à coquille, des colliers à bride fendue, etc... Cependant, aucun des colliers existant ne peut être manipulé à distance avec une seule pince de télémanipulateur, ce qui conduit à certaines difficultés lorsqu'on désire raccorder selon cette technique des tuyauteries auxquelles on ne peut accéder qu'à l'aide de télémanipulateurs. Cela est notamment le cas pour les tuyauteries situées à l'intérieur d'enceintes de confinement, notamment dans l'industrie nucléaire, ainsi que pour les tuyauteries situées dans un endroit inaccessible à l'homme.

La présente invention a précisément pour objet un collier de serrage pour le raccordement de tuyauteries équipées d'embouts coniques, tel que décrit dans le document DE-A-2 040 848, ne présentant pas les inconvénients des colliers existants et pouvant être manipulé à distance à l'aide d'une seule pince de télémanipulateur, que celui-ci soit un télémanipulateur maître-esclave mécanique ou un télémanipulateur à commande électronique.

A cet effet, il est proposé un collier de serrage pour le raccordement de deux tuyauteries équipées d'embouts coniques à leurs extrémités, comprenant deux demi-colliers de profil complémentaire de celui des embouts et des moyens de serrage démontables, reliant les demi-colliers, ces demi-colliers étant articulés autour d'un axe commun. Selon l'invention, ce collier est caractérisé en ce qu'il comprend deux pièces formant, d'un côté dudit axe, les deux demi-colliers et de l'autre côté, deux leviers de préhension aptes à être sollicités l'un vers l'autre par un outil de préhension, des moyens élastiques agissant sur lesdites pièces pour les solliciter vers une position de fermeture des demi-colliers, dans laquelle lesdits moyens de serrage peuvent être mis en œuvre pour raccorder les tuyauteries.

Selon un mode de réalisation préféré de l'invention, un adaptateur est articulé sur chacun des leviers de préhension, pour recevoir un patin de l'outil de préhension.

Selon un autre aspect de l'invention, les moyens élastiques comprennent un ressort de compression placé entre les leviers de préhension.

Les moyens de serrage peuvent notamment être constitués par un boulon basculant monté à l'extrémité de l'un des demi-colliers opposée audit axe et par une patte formée à l'extrémité de l'autre demi-collier opposée audit axe et pourvue d'une encoche pour recevoir ledit boulon.

On décrira maintenant, à titre d'exemple non limitatif, un mode de réalisation préféré de l'invention en se référant aux dessins annexés dans lesquels :

— la figure 1 est une vue en coupe longitudinale schématique des extrémités adjacentes de deux tuyauteries équipées d'embouts coniques aptes à recevoir le collier de serrage selon l'invention ;

— la figure 2 est une vue en perspective et à plus grande échelle illustrant un mode de réalisation préféré du collier de serrage selon l'invention ; et

— la figure 3 est une vue de côté et en coupe partielle illustrant de façon schématique l'installation du collier de serrage de la figure 2 à l'aide d'une pince de télémanipulateur sur les embouts coniques des deux tuyauteries représentées sur la figure 1.

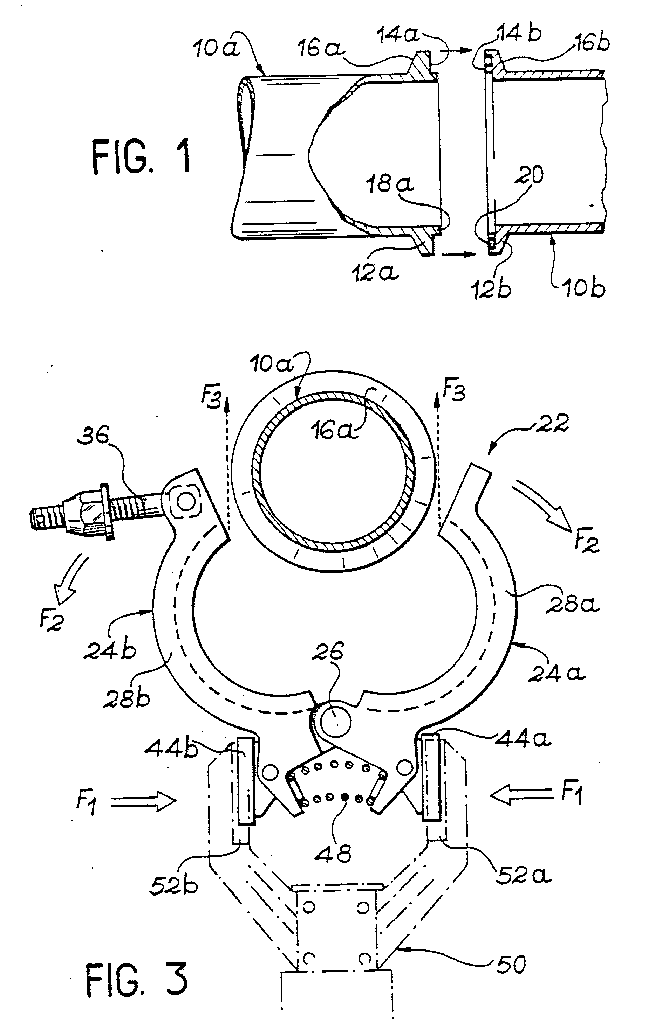

Sur la figure 1, on a représenté les extrémités adjacentes à raccorder de deux tuyauteries 10a et 10b. Chacune de ces extrémités des tuyauteries 10a et 10b comporte une bride ou embout conique 12a et 12b respectivement. Ces embouts coniques peuvent notamment être rapportés par soudage. Ils comportent chacun une face d'extrémité plane 14a et 14b respectivement et une face opposée tronconique 16a, 16b respectivement. Un embrèvement 18a prolongeant l'embout 12a assure le centrage des extrémités des tuyauteries lorsqu'elles sont en appui l'une contre l'autre. L'étanchéité du raccordement est assurée par un joint annulaire 20 logé dans une gorge formée sur la face 14b de l'embout 12b et venant en appui sur la face 14a de l'embout 12a lorsque les embouts sont en contact.

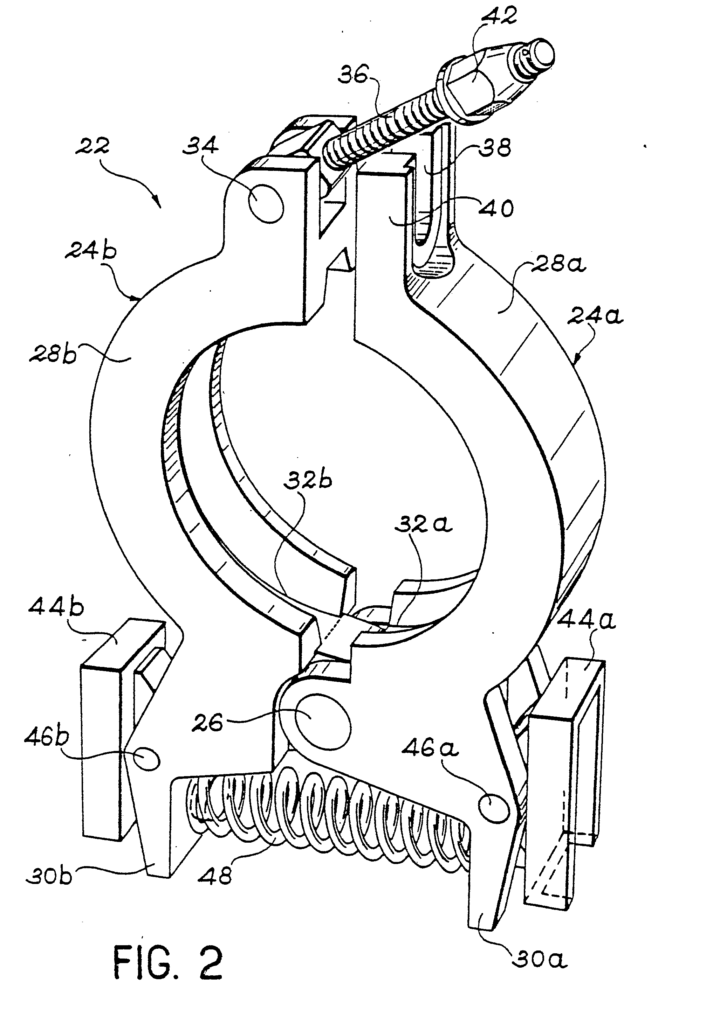

Conformément à l'invention, le raccordement des tuyauteries 10a et 10b de la figure 1 est réalisé au moyen d'un collier de serrage télémanipulable 22 qui va maintenant être décrit en se référant à la figure 2.

Le collier de serrage 22 selon l'invention comprend principalement deux pièces 24a et 24b articulées entre elles autour d'un axe commun 26. D'un côté de l'articulation formée par l'axe 26, situé au-dessus de celui-ci sur la figure 2, chacune des pièces 24a, 24b forme un demi-collier 28a, 28b respectivement. Du côté opposé de l'articulation formée par l'axe 26, c'est-à-dire en-dessous de celui-ci en considérant la figure 2, chacune des pièces 24a et 24b forme un levier de préhension 30a et 30b respectivement.

Les demi-colliers 28a et 28b présentent généralement en vue de côté la forme de deux demi-cercles complémentaires lorsque le collier est fermé comme l'illustre la figure 2. Les axes des demi-cercles formés en section par les demi-colliers 24a et 24b sont orientés parallèlement à l'axe 26.

Chacun des demi-colliers 28a et 28b comporte sur sa face interne une gorge 32a et 32b respectivement. Les flancs de ces gorges 32a, 32b présentent une forme tronconique complémentaire de celles des faces 16a et 16b des embouts 12a et 12b des tuyauteries à raccorder (figure 1). La largeur des gorges 32a et 32b est telle que le serrage du collier 22 a pour effet d'appliquer l'un contre l'autre les embouts tronconiques des tuyauteries en comprimant le joint 20.

A son extrémité opposée à l'axe d'articulation 26, le demi-collier 24b porte un boulon basculant 36, par l'intermédiaire d'un axe d'articulation 34 parallèle à l'axe 26. Lorsque le collier 22 est en position fermée comme l'illustre la figure 2, le boulon 36 peut venir se loger dans une encoche 38 formée dans une patte 40 prolongeant radialement l'extrémité du demi-collier 24a opposée à l'axe d'articulation 26.

Un écrou 42 vissé sur le boulon 36 assure le serrage du collier en venant prendre appui sur la patte 40. L'effort exercé par l'écrou 42 sur la patte 40 a pour effet de faire pivoter les demi-colliers 24a et 24b autour de l'axe 26 en rapprochement l'un de l'autre. Lorsque des embouts coniques tels que les embouts 12a et 12b sur la figure 1 sont placés dans les gorges 32a et 32b des demi-colliers, la coopération des surfaces tronconiques des embouts et des gorges a pour effet d'appliquer les embouts l'un contre l'autre. Le raccordement étanche des tuyauteries est ainsi réalisé.

Chacun des leviers de préhension 30a et 30b porte une pièce appelée « adaptateur » 44a et 44b respectivement. Chacun des adaptateurs est articulé sur le levier correspondant autour d'un axe 46a, 46b parallèle à l'axe d'articulation 26 des pièces 24a et 24b. Les adaptateurs 44a et 44b sont montés sur les faces opposées des leviers 30a et 30b et leur articulation sur ces derniers leur permet de s'adapter aux mouvements de serrage des pinces de télémanipulateurs qui restent en permanence parallèles l'une à l'autre, quelles que soient les positions occupées par les pièces 24a et 24b autour de l'axe d'articulation 26. Les faces externes des adaptateurs 44a et 44b présentent des formes complémentaires de celles des patins de la pince ou de l'outil de préhension destiné à manipuler le collier 22.

Un ressort de compression 48 est comprimé entre les leviers 30a et 30b afin de solliciter ces derniers en écartement l'un de l'autre. Cette position correspond à la fermeture du collier 22 qui se trouve donc naturellement en position fermée lorsqu'aucun effort n'est exercé sur les adaptateurs 44a et 44b.

Comme l'illustre en particulier la figure 3, lorsqu'on désire mettre en place le collier 22 afin de raccorder deux tuyauteries équipées à leurs extrémités de deux embouts tronconiques 16a, 16b (figure 1), on place chacun des patins 52a et 52b d'une pince de préhension 50 d'un télémanipulateur dans les adaptateurs 44a et 44b du collier. En exerçant sur ces derniers, à l'aide de la pince 50, un effort de serrage dans le sens des flèches F1 sur la figure 3, on fait pivoter les deux pièces 24a et 24b autour de l'axe 26 dans le sens correspondant à l'ouverture du collier (flèche F2 sur la figure 3). Evidemment, ce mouvement n'est possible que si le boulon basculant 36 est dégagé de l'encoche 38. La distance entre les extrémités des demi-colliers 28a et 28b opposées à l'axe d'articulation 26 est alors supérieure au diamètre externe des embouts 16a et 16b. Il est donc possible de venir coiffer ces derniers à l'aide du collier 22 en déplaçant celui-ci dans le sens des flèches F3 sur la figure 3 à l'aide du télémanipulateur. Dans cette position, le relâchement de l'effort de serrage F1 appliqué par la pince 50 sur les adaptateurs 44a et 44b permet au collier 22 de reprendre sa position fermée de repos sous l'action du ressort de compression 48.

Le collier 22 est alors immobilisé autour des embouts, de sorte que la pince 50 peut être retirée des adaptateurs 44a et 44b et utilisée pour faire basculer le boulon 36 dans l'encoche 38, puis pour visser l'écrou 42 afin de serrer le collier.

Cette description fait apparaître que le collier selon l'invention peut être mis en place et serré à l'aide d'un seul télémanipulateur.

Le démontage du collier s'effectue dans l'ordre inverse des opérations qui viennent d'être décrites et peut également être réalisé à l'aide d'un télémanipulateur unique.

Ainsi, les adaptateurs 44a et 44b peuvent être d'une forme quelconque adaptée à la forme des patins de la pince de préhension et ils peuvent également être supprimés si la forme des leviers 30a et 30b autorise une action directe de la pince sur ceux-ci. Le ressort de compression 48 peut également être remplacé par tout autre organe élastique tel qu'un ressort de torsion monté sur l'axe d'articulation 26. Enfin, le boulon basculant et l'encoche qui lui est associée peuvent être remplacés par tout autre moyen de serrage connu permettant un serrage et un déserrage du collier à l'aide d'un télémanipulateur.

**Revendications**

1. Collier de serrage pour le raccordement de deux tuyauteries (10a, 10b) équipées d'embouts coniques (16a, 16b) à leurs extrémités, comprenant deux demi-colliers (28a, 28b) de profils complémentaires de celui des embouts et des moyens de serrage démontables (36, 38, 42) reliant les demi-colliers, ces demi-colliers étant articulés autour d'un axe commun (26), ledit collier (22) étant caractérisé en ce qu'il comprend deux pièces (24a, 24b) formant, d'un côté dudit axe, les deux demi-colliers (28a, 28b) et de l'autre côté, deux leviers de préhension (30a, 30b) aptes à être sollicités l'un vers l'autre par un outil de préhension (50), des moyens élastiques (48) agissant sur lesdites pièces pour les solliciter vers une position de fermeture des demi-colliers (28a, 28b) dans laquelle lesdits moyens de serrage (36, 38, 42) peuvent être mis en œuvre pour raccorder les tuyauteries.

2. Collier de serrage selon la revendication 1, caractérisé en ce qu'un adaptateur (44a, 44b) est articulé sur chacun des leviers de préhension (30a, 30b) pour recevoir un patin (52a, 52b) dudit outil de préhension (50).

3. Collier de serrage selon l'une quelconque des revendications 1 et 2, caractérisé en ce que lesdits moyens élastiques comprennent un ressort de compression (48) placé entre les leviers de préhension (30a, 30b).

4. Collier de serrage selon l'une quelconque des revendications 1 à 3, caractérisé en ce que les moyens de serrage comprennent un boulon basculant (36) monté à l'extrémité de l'un (28b) des demi-colliers opposée audit axe (26), et une patte (40) formée à l'extrémité de l'autre demi-collier (28a) opposée audit axe (26) et pourvue d'une encoche (38) pour recevoir ledit boulon.

**Claims**

1. Clamp for coupling together two pipes (10a, 10b) equipped at their ends with conical nipples (16a, 16b) having two half-clamps (28a, 28b) with a profile complimentary of that of the nipples and dismantlable tightening means (36, 38, 42) joining the half-clamps articulated about a common pin, characterized in that the clamp (22) comprises two members (24a, 24b) forming on one side of said pin the two half-clamps (28a, 28b) and on the other side two gripping levers (30a, 30b) which can be drawn towards one another by a gripping tool (50), elastic means (48) acting on said members to draw them towards a half-clamp closing position, in which said tightening means (36, 38, 42) can be put into operation for joining the pipes.

2. Clamp according to claim 1, characterized in that an adaptor (44a, 44b) is articulated on each of the gripping levers (30a, 30b) to receive a show (52a, 52b) of said gripping tool (50).

3. Clamp according to either of the claims 1 and 2, characterized in that the elastic means comprise a compression spring (48) placed between the gripping levers (30a, 30b).

4. Clamp according to any one of the claims 1 to 3, characterized in that the tightening means comprise a rocking bolt (36) mounted at the end of one (28b) of the halfclamps opposite to said pin (26) and a shoe (40) formed on the end of the other half-clamp (28a) opposite to said pin (26) and provided with a slot (38) for receiving said bolt.

**Patentansprüche**

1. Verbindungsklemme zum Verbinden von zwei mit an ihren Enden mit konischen Ansatzstücken (16a, 16b) versehenen Rohren (10a, 10b), umfassend zwei Halbklemmen (28a, 28b) mit zu denjenigen der Ansatzstücke komplementären Profilen und die Halbklemmen verbindenden, entfernbaren Spannmitteln (36, 38, 42), wobei diese Halbklemmen um eine gemeinsame Achse (26) verschwenkbar sind und die genannte Klemme (22), dadurch gekennzeichnet, daß sie zwei Teile (24a, 24b), die auf eine Seite der genannten Achse die zwei Halbklemmen (28a, 28b) und auf der anderen Seite zwei Greifhebel (30a, 30b) bilden, die durch ein Greifwerkzeug (50) aufeinanderzu belastbar sind, und elastische Mittel (48) umfaßt, die auf die genannten Teile wirken, um sie in Richtung auf eine Schließstellung der Halbklemmen (28a, 28b) zu belasten, in der die genannten Spannmittel (36, 38, 42) zum Verbinden der Rohre eingesetzt werden können.

2. Verbindungsklemme nach Anspruch 1, dadurch gekennzeichnet, daß an jedem der Greifhebel (30a, 30b) ein Anpassungsstück (44a, 44b) angelenkt ist, um die Schuhe (52a, 52b) des genannten Greifwerkzeugs (50) aufzunehmen.

3. Verbindungsklemme nach irgendeinem der Ansprüche 1 oder 2, dadurch gekennzeichnet, daß die genannten elastischen Mittel eine Druckfeder (48) aufweisen, die zwischen den Greifhebeln (30a, 30b) angeordnet ist.

4. Verbindungsklemme nach irgendeinem der Ansprüche 1 bis 3, dadurch gekennzeichnet, daß die Spannmittel einen verschwenkbaren Bolzen (36), der an dem zu der Achse (26) entgegengesetzten Ende einer (28b) der Halbklemmen angebracht ist, und einen Lappen (40) umfassen, der an dem der genannten Achse (26) entgegengesetzten Ende der anderen Halbklemme (28a) ausgebildet und mit einer Aussparung (38) zur Aufnahme des genannten Bolzens versehen ist.

0 194 200

FIG. 1

FIG. 3

FIG. 2